# EUROPEAN PATENT APPLICATION

(11) **EP 4 742 426 A1**
(43) Date of publication of application: **13.05.2026**
(21) Application number: 25205247.7
(22) Date of filing: 29.09.2025
(51) Int. Cl.: H01M 50/533, H01M 50/54

(54) **SECONDARY BATTERY AND METHOD FOR MANUFACTURING THE SAME**

(30) Priority: 11.11.2024 KR 20240159525
(71) Applicant: SAMSUNG SDI CO., LTD., Yongin-si, Gyeonggi-do 17084 (KR)
(72) Inventor: Kim, Minwoo, 17084 Yongin-si, Gyeonggi-do (KR); Hwang, Inhyun, 17084 Yongin-si, Gyeonggi-do (KR); Song, Daseong, 17084 Yongin-si, Gyeonggi-do (KR)
(74) Representative: Meissner Bolte Partnerschaft mbB

(57) **Abstract**

A secondary battery includes an electrode assembly comprising a plurality of electrode plates and a plurality of separators between the plurality of electrode plates, the plurality of electrode plates comprising first tabs and second tabs, and each of the plurality of electrode plates comprises a coating part coated with an active material, a current collector electrically connected to the first tabs and the second tabs, and a case accommodating the electrode assembly, wherein the current collector includes a first section to which the first tabs are connected, and the first section includes a first sub-section to which a portion of the first tabs is welded in an initially bent state and a second sub-section to which a remaining portion of the first tabs is welded in a secondarily bent state.

## Description

### BACKGROUND

### 1. Field

The present invention relates to a secondary battery and a method for manufacturing the same.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The above information disclosed in this Background section is for enhancement of understanding of the background of the present invention, and therefore, it may contain information that does not constitute related (or prior) art.

### SUMMARY OF THE INVENTION

The present invention concerns a secondary battery, including an electrode assembly including a plurality of electrode plates and a plurality of separators between the plurality of electrode plates, wherein the plurality of electrode plates comprise first tabs and second tabs, in particular being formed in the plurality of electrode plates, and each of the plurality of electrode plates includes a coating part coated with an active material, a current collector electrically connected to the first tabs and the second tabs, and a case accommodating the electrode assembly, wherein the current collector includes a first section to which the first tabs are connected, and the first section includes a first sub-section to which a portion of the first tabs is welded in an initially bent state and a second sub-section to which a remaining portion of the first tabs is welded in a secondarily bent state.

The current collector may further include a second section to which the second tabs are welded, and the second section may include a third sub-section to which a portion of the second tabs is welded in an initially bent state and a fourth sub-section to which a remaining portion of the second tabs is welded in a secondarily bent state.

The first tabs and the second tabs may each be welded to the first sub-section and the third sub-section, respectively, and wherein the first tabs and the second tabs may be initially bent in opposite directions.

The first tabs and the second tabs may each be welded to the second sub-section and the fourth sub-section, respectively, and wherein the first tabs and the second tabs may be secondarily bent in a same direction.

The current collector may further include a central section, the first sub-section may extend in a first direction from the central section, the third sub-section may extend in a second direction from the central section, and the second direction may be different from the first direction.

Welding between the portion of the first tabs and the first sub-section and welding between the portion of the second tabs and the third sub-section may be performed on a first plane, welding between the remaining portion of the first tabs and the third sub-section may be performed on a second plane different from the first plane, and welding between the remaining portion of the second tabs and the fourth sub-section may be performed on a third plane different from the first plane and parallel to the second plane.

A separation space may be between the remaining portion of the first tabs welded to the second sub-section and an outermost coating part adjacent to the second sub-section.

A first set of welding lines may be on the first sub-section, and each of the first set of welding lines may extend in a direction in which the first tabs are initially bent.

A second set of welding lines may be on the second sub-section, and each of the second set of welding lines may extend in a direction in which the first tabs are secondarily bent.

The first tabs may be laser welded to the first section.

The case may include a first long-side wall and a second long-side wall facing each other and being spaced apart from each other, and a first short-side wall and a second short-side wall facing each other and being spaced apart from each other, wherein the first short-side wall and the second short-side wall may have a smaller area than the first long-side wall and the second long-side wall, the first sub-section may face the first short-side wall, and the second sub-section may face the first long-side wall.

Further the present invention concerns a method for manufacturing a secondary battery, the method including preparing an electrode assembly including a plurality of electrode plates and a plurality of separators disposed between the plurality of electrode plates, wherein first tabs and second tabs are formed in the plurality of electrode plates, and each of the plurality of electrode plates includes a coating part coated with an active material, preparing a current collector including a first section electrically connected to the first tabs and a second section electrically connected to the second tabs, initially bending the first tabs, secondarily bending the first tabs, welding a portion of the first tabs to a first sub-section of the first section, wherein the first tabs are initially bent, welding a remaining portion of the first tabs to a second sub-section of the first section, wherein the first tabs are secondarily bent, and inserting the electrode assembly coupled with the current collector into a case.

The method for manufacturing a secondary battery may further include initially bending the second tabs, secondarily bending the second tabs, welding a portion of the second tabs to a third sub-section of the second section wherein the second tabs are initially bent, and welding a remaining portion of the second tabs to a fourth sub-section of the second section, wherein the second tabs are secondarily bent.

The first tabs and the second tabs may each be welded to the first sub-section and the third sub-section, respectively, and wherein the first tabs and the second tabs may be initially bent in opposite directions.

The first tabs and the second tabs may each be welded to the second sub-section and the fourth sub-section, respectively, and wherein the first tabs and the second tabs may be secondarily bent in a same direction.

Welding between the portion of the first tabs and the first sub-section and welding between the portion of the second tabs and the third sub-section may be performed on a first plane, welding between the remaining portion of the first tabs and the third sub-section may be performed on a second plane different from the first plane, and welding between the remaining portion of the second tabs and the fourth sub-section may be performed on a third plane different from the first plane and parallel to the second plane.

The method for manufacturing a secondary battery may further include before secondarily bending the first tabs, arranging a support plate on one surface of the electrode assembly.

Welding to the second sub-section may include welding the remaining portion of the first tabs to the second sub-section of the first section, wherein the support plate may be arranged between the remaining portion of the first tabs and an outermost coating part adjacent to the second sub-section.

The method for manufacturing a secondary battery may further include after welding to the second sub-section, removing the support plate.

The support plate may include a ceramic material.

These and other aspects and features of the present invention will be described in or will be apparent from the following description of embodiments of the present invention.

However, aspects and features of the present invention are not limited to those described above, and other aspects and features not mentioned will be clearly understood by a person skilled in the art from the detailed description, described below.

### BRIEF DESCRIPTION OF DRAWINGS

The following drawings attached to this specification illustrate embodiments of the present invention, and further describe aspects and features of the present invention together with the detailed description of the present invention. Thus, the present invention should not be construed as being limited to the drawings.

Features will become apparent to those of ordinary skill in the art by describing in detail exemplary embodiments with reference to the attached drawings, in which:
FIG. 1 illustrates an electrode assembly and a current collector according to an embodiment of the present invention;
FIG. 2 illustrates a detailed configuration of the current collector according to an embodiment of the present invention;
FIG. 3 illustrates a state where first tabs and second tabs of an electrode assembly according to an embodiment of the present invention are folded in first and second directions;
FIG. 4 illustrates a state where the first tabs and the second tabs of the electrode assembly according to an embodiment of the present invention are folded in a third direction;
FIG. 5 is a cross-sectional view taken along A-A' of FIG. 4 according to an embodiment of the present invention;
FIG. 6 is a cross-sectional view taken along B-B' of FIG. 4 according to an embodiment of the present invention;
FIG. 7 illustrates a state in which the support plate is arranged according to an embodiment of the present invention, and the current collector is positioned thereon;
FIG. 8 illustrates the current collector welded to the first tabs and the second tabs according to an embodiment of the present invention;
FIG. 9 illustrates a welding region between the first tabs and the current collector according to an embodiment of the present invention;
FIG. 10 illustrates the welding lines according to an embodiment of the present invention;
FIG. 11 illustrates an example of the welding lines of second set formed on the second sub-section according to an embodiment of the present invention;
FIG. 12 illustrates a secondary battery including an electrode assembly welded to a current collector according to an embodiment of the present invention; and
FIG. 13 is a flowchart illustrating a method of manufacturing a secondary battery according to an embodiment of the present invention.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this invention will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

Hereinafter, embodiments of the present invention will be described, in detail, with reference to the accompanying drawings. The terms or words used in the present specification and claims are not to be limitedly interpreted as general or dictionary meanings and should be interpreted as meanings and concepts that are consistent with the technical idea of the present invention on the basis of the principle that an inventor can be his/her own lexicographer to appropriately define concepts of terms to describe his/her invention in the best way.

The embodiments described in this specification and the configurations shown in the drawings are only some of the embodiments of the present invention and do not represent all of the technical spirit, aspects, and features of the present invention. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present invention relates to "one or more embodiments of the present invention." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present invention and is not intended to be limiting of the present invention. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

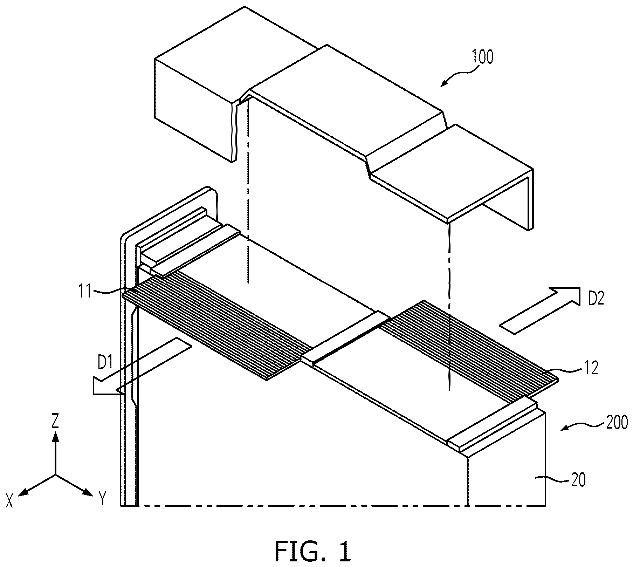

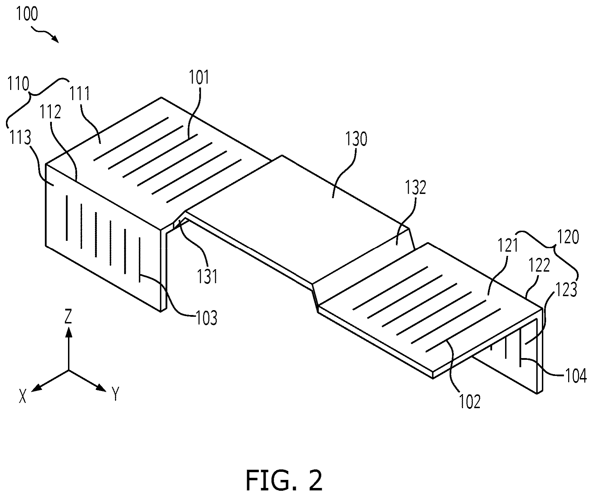

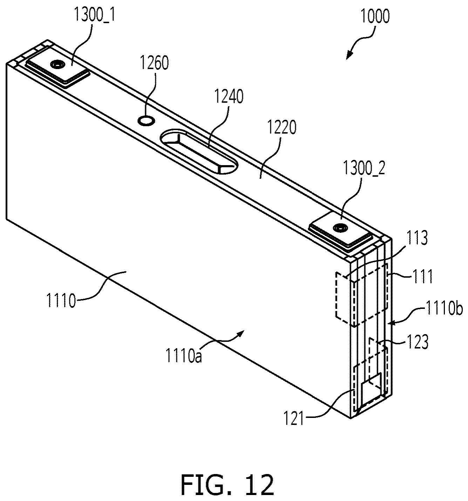

FIG. 1 illustrates an electrode assembly 200 and a current collector 100 according to an embodiment of the present invention. FIG. 2 illustrates a detailed configuration of the current collector 100 according to an embodiment of the present invention. Referring to FIGS. 1 and 2, a secondary battery according to an embodiment of the present invention includes an electrode assembly 200, a current collector 100, and a case (for example, 1110 of FIG. 12). The electrode assembly 200 may include a plurality of electrode plates each having a coating part 20 coated with an active material and a plurality of separators disposed between the plurality of electrode plates. A first tab 11 and a second tab 12 may be formed in each of the plurality of electrode plates. The current collector 100 may be electrically connected to the first tab 11 and the second tab 12. The case may accommodate the current collector 100 and the electrode assembly 200, which are combined with each other.

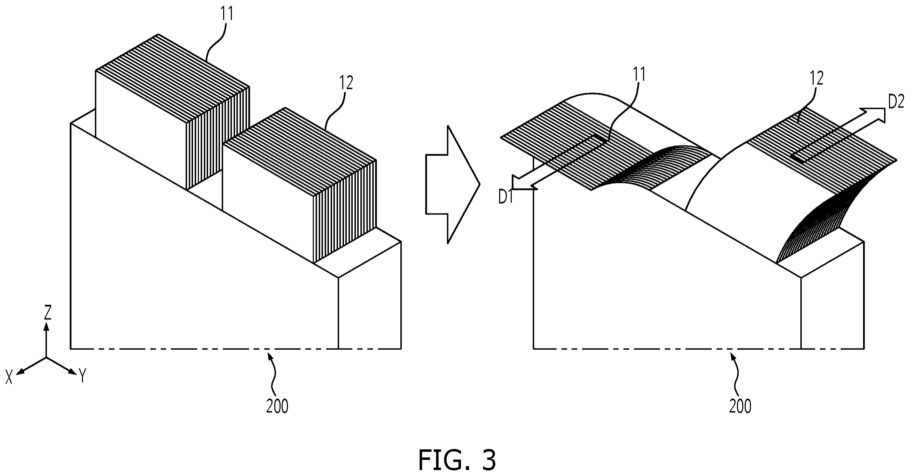

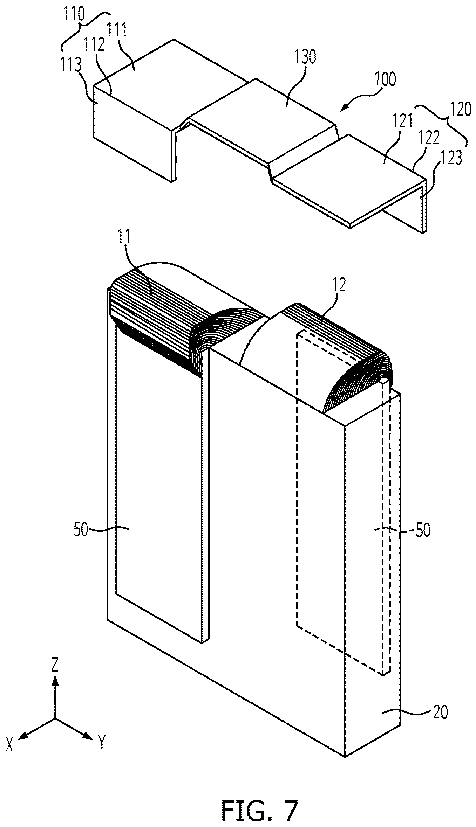

Here, the first tab 11 and the second tab 12 of the electrode assembly 200 may be located on one side surface of the electrode assembly 200. The first tab 11 and the second tab 12 may be folded (for example, initially bent) in different directions (for example, in opposite directions) before being welded to the current collector 100. For example, as shown, the first tab 11 may be initially bent in a first direction D1, and the second tab 12 may be initially bent in a second direction D2. Subsequently, the first tab 11 and the second tab 12 may be secondarily bent. This will be described below with reference to FIGS. 3 to 6. The current collector 100 may be placed on the electrode assembly 200 so as to contact the first tab 11 and the second tab 12 in a folded state. This will be described below with reference to FIGS. 7 to 9.

In an embodiment, the current collector 100 may include a central section 130, a first section 110 that is electrically connected to the first tab 11, and a second section 120 that is electrically connected to the second tab 12. The first section 110 may include a first sub-section 111 that is welded in a state where a portion of the first tab 11 is initially bent, and a second sub-section 113 that is welded in a state where the remaining portion of the first tab 11 is secondarily bent. The first sub-section 111 may be formed to extend in one direction (e.g., the negative Y-axis direction) from the central section 130. The second sub-section 113 may be formed in a manner of being folded along a first folding line 112, which is a boundary line at one end of the first sub-section 111.

The second section 120 may include a third sub-section 121 that is welded in a state where a portion of the second tab 12 is initially bent, and a fourth sub-section 123 that is welded in a state where the remaining portion of the second tab 12 is secondarily bent. The third sub-section 121 may be formed to extend in another direction (e.g., the Y-axis direction) from the central section 130. The fourth sub-section 123 may be formed in a manner of being folded along a second folding line 122, which is a boundary line at one end of the third sub-section 121.

In an embodiment, a predetermined step difference may be formed between the central section 130 and the first sub-section 111. By means of the step difference, the central section 130 may have a shape protruding upward (in a Z-axis direction), and the central section 130 and the first sub-section 111 may be connected by way of a first connecting portion 131 that links the step difference. Similarly, the central section 130 and the third sub-section 121 may be connected by way of a second connecting portion 132.

A welding process (for example, laser welding) for electrical connection with the first tab 11 may be performed on the first sub-section 111. Laser welding may be performed linearly, and a plurality of welding lines may be formed. A first set of welding lines 101 formed linearly on the first sub-section 111 may be formed along the overlapping direction (D1 in FIG. 1) where the first tab 11 is folded. As illustrated, each welding line of the first set of welding lines 101 may be formed so as to extend in a direction (for example, the Y-axis direction) in which the first tab 11 is primarily bent.

In addition, on the second sub-section 113, a second set of welding lines 103 may be formed on a portion of the first tab 11 that is folded in a Z-axis direction. The welding lines may be formed linearly by laser welding. The second set of welding lines 103 formed linearly on the second sub-section 113 may be formed along the overlapping direction in which the first tab 11 is folded in the Z direction. As illustrated, each welding line of the second set of welding lines 103 may be formed so as to extend in a direction (for example, a Z-axis direction) in which the first tab 11 is secondarily bent.

A welding process (for example, laser welding) for electrical connection with the second tab 12 may be performed on the third sub-section 121. Laser welding may be performed linearly, and a plurality of welding lines may be formed. A third set of welding lines 102 formed linearly on the third sub-section 121 may be formed along the overlapping direction (D2 in FIG. 1) where the second tab 12 are folded. As illustrated, each welding line of the third set of welding lines 102 may be formed so as to extend in a direction (for example, a Y-axis direction) in which the second tab 12 are initially bent.

In addition, on the fourth sub-section 123, a fourth set of welding lines 104 may be formed on a portion of the second tab 12 that is folded in the Z-axis direction. The welding lines may be formed linearly by laser welding. The fourth set of welding lines 104 formed linearly on the fourth sub-section 123 may be formed along the overlapping direction in which the second tab 12 is folded in the Z-axis direction. As illustrated, each welding line of the fourth set of welding lines 104 may be formed so as to extend in a direction (for example, a Z-axis direction) in which the second tab 12 is secondarily bent.

FIG. 3 illustrates a state where a plurality of the first tab 11 and a plurality of the second tab 12 of an electrode assembly 200 according to an embodiment of the present invention are folded in first and second directions D1, D2, respectively. Referring to FIG. 3, the plurality of the first tab 11 and the plurality of the second tab 12 may be formed so as to extend above (in the Z-axis direction) a coating layer. Subsequently, the plurality of the first tab 11 and the plurality of the second tab 12 may be initially bent in opposite directions to each other. For example, the plurality of the first tab 11 may be initially bent in the first direction D1, and the plurality of the second tab 12 may be initially bent in the second direction D2.

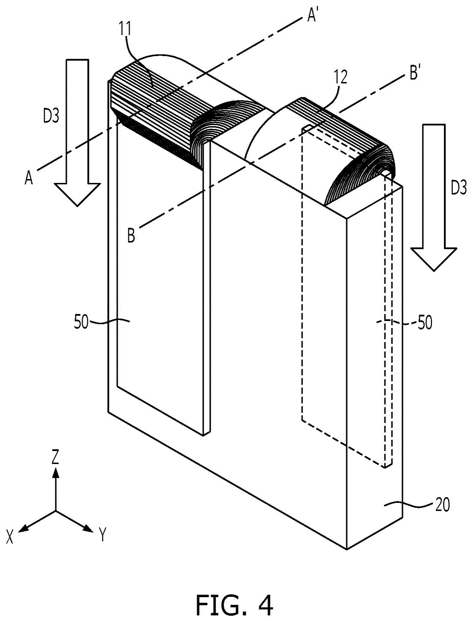

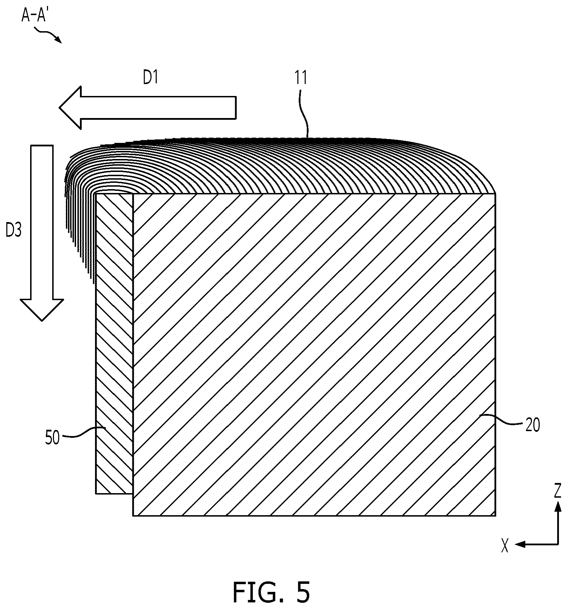

FIG. 4 illustrates a state where the plurality of the first tab 11 and the plurality of the second tab 12 of the electrode assembly according to an embodiment of the present invention are folded in a third direction D3. Referring to FIG. 4, after the plurality of the first tab 11 and the plurality of the second tab 12 are initially bent in different directions, they may be secondarily bent in the same third direction D3. Here, the secondary bending is bending downward (in the D3 or Z direction) in a state in which each tabs was previously bent laterally. During the secondary bending, a support plate 50 may be interposed between a coating part 20 (see FIG. 5) and the plurality of the first tab 11 (or the plurality of the second tab 12). In other words, by means of folding, the plurality of the first tab 11 (or the plurality of the second tab 12) may be spaced a predetermined distance so as not to contact the coating part 20.

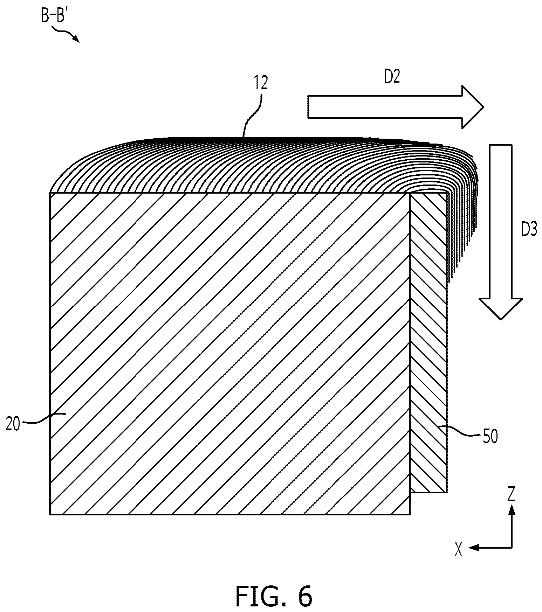

FIG. 5 is a cross-sectional view taken along A-A' of FIG. 4 according to an embodiment of the present invention. FIG. 6 is a cross-sectional view taken along B-B' of FIG. 4 according to an embodiment of the present invention. Referring to FIG. 5, the plurality of the first tab 11 may be initially bent in the first direction D1, and may be secondarily bent in the third direction (the D3 direction). During the secondary bending, the support plate 50 may be positioned between the coating part 20 and the plurality of the first tab 11. The support plate 50 may space the plurality of the first tab 11 apart from the coating part 20 so that there is no contact.

Referring to FIG. 6, the plurality of the second tab 12 may be initially bent in the second direction D2, and may be secondarily bent in the third direction (the D3 direction). During the secondary bending, the support plate 50 may be positioned between the coating part 20 and the plurality of the second tab 12. The support plate 50 may space the plurality of the second tab 12 apart from the coating part 20 so that there is no contact.

FIG. 7 illustrates a state in which the support plate 50 is arranged according to an embodiment of the present invention, and the current collector 100 is positioned thereon. Referring to FIG. 7, the current collector 100 may be placed on the plurality of the first tab 11 and the plurality of the second tab 12 after the plurality of the first tab 11 and the plurality of the second tab 12 are secondarily bent by using the support plate 50. By placing the current collector 100, the inner surface of the first sub-section 111 may contact upper surfaces of the folded plurality of the first tab 11, and the inner surface of the second sub-section 113 may contact side surfaces of the plurality of the first tab 11. Further, the inner surface of the third sub-section 121 may contact upper surfaces of the plurality of the second tab 12, and the inner surface of the fourth sub-section 123 may contact side surfaces of the plurality of the second tab 12. In such a maintained contact state, welding may be performed on the first section 110 and the second section 120.

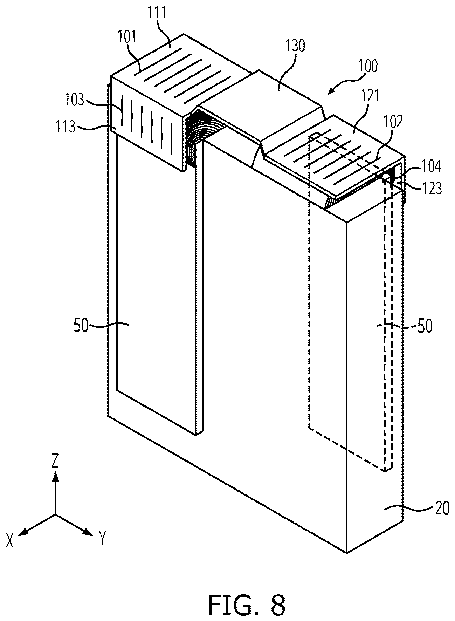

FIG. 8 illustrates the current collector 100 welded to the plurality of the first tab 11 and the plurality of the second tab 12 according to an embodiment of the present invention. Referring to FIG. 8, the plurality of the first tab 11 may be welded to the first section 110 by laser welding. Specifically, welding between a portion of the plurality of the first tab 11 and the first sub-section 111 and welding between a portion of the plurality of the second tab 12 and the third sub-section 121 may be carried out on a first plane (an XY plane). Further, welding between the remaining portion of the plurality of the first tab 11 and the third sub-section 121 may be carried out on a second plane (an XZ plane) that differs from the first plane. Welding between the remaining portion of the plurality of the second tab 12 and the fourth sub-section 123 may be carried out on a third plane (also an XZ plane) that differs from the first plane but is parallel to the second plane. Welding carried out on the first plane may be performed separately, not continuously, from welding carried out on the second plane (or the third plane).

In an embodiment, in a state where the plurality of the first tab 11 and the plurality of the second tab 12 are initially bent in opposite directions, the plurality of the first tab 11 and the plurality of the second tab 12 may each be welded to the first sub-section 111 and the third sub-section 121, respectively. Further, in a state where the plurality of the first tab 11 and the plurality of the second tab 12 are secondarily bent in the same direction, the plurality of the first tab 11 and the plurality of the second tab 12 may each be welded to the second sub-section 113 and the fourth sub-section 123, respectively.

As a result of performing welding, a first set of welding lines 101, a second set of welding lines 103, a third set of welding lines 102, and a fourth set of welding lines 104 may be formed on the current collector 100. As illustrated, the first set of welding lines 101 may be formed on the first sub-section 111, and each welding line of the first set of welding lines 101 may be formed so as to extend in a direction in which the plurality of the first tab 11 is initially bent. The second set of welding lines 103 may be formed on the second sub-section 113, and each welding line of the second set of welding lines 103 may be formed so as to extend in a direction in which the plurality of the first tab 11 are secondarily bent. The third set of welding lines 102 may be formed on the third sub-section 121, and each welding line of the third set of welding lines 102 may be formed so as to extend in a direction in which the plurality of the second tab 12 are initially bent. Also, the fourth set of welding lines 104 may be formed on the fourth sub-section 123, and each welding line of the fourth set of welding lines 104 may be formed so as to extend in a direction in which the plurality of the second tab 12 are secondarily bent.

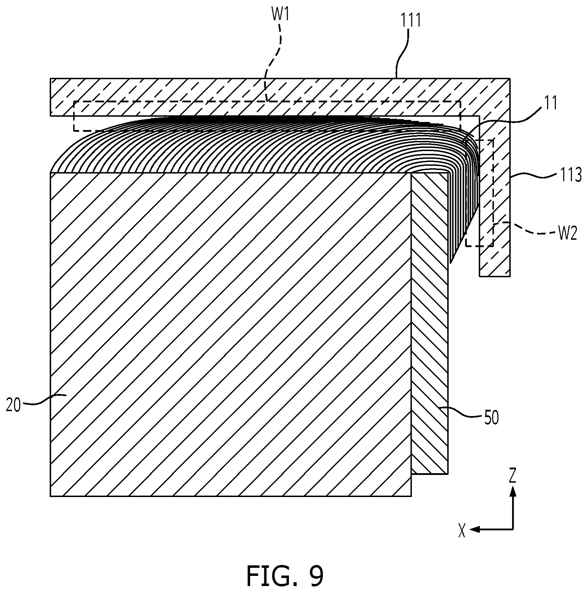

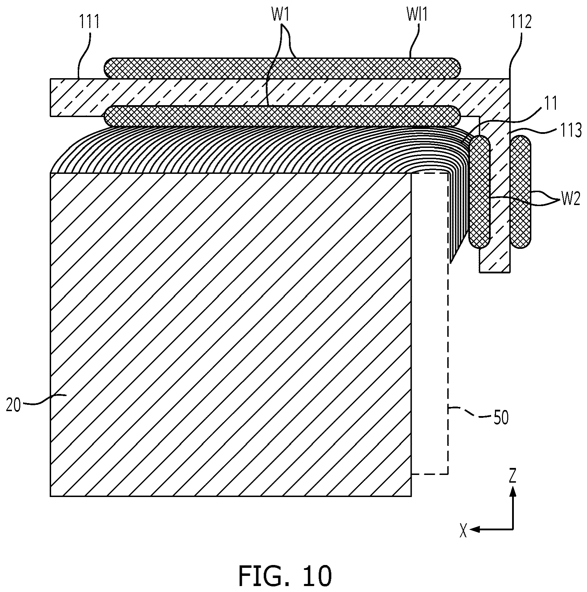

FIG. 9 illustrates a welding region between the plurality of the first tab 11 and the current collector 100 according to an embodiment of the present invention. FIG. 10 illustrates the welding lines according to an embodiment of the present invention. In FIGS. 9 and 10, an example of welding between the bent plurality of the first tab 11 and the first sub-section 111 and the second sub-section 113 is illustrated, but the third sub-section and the fourth sub-section 123 may also be similarly welded to the plurality of the second tab 12. Hereinafter, coupling between the first sub-section 111 and the second sub-section 113, and the plurality of the first tab 11 is described as an example.

The current collector 100 may be placed on the plurality of the first tab 11 that has been subjected to initial bending and secondary bending. The welding region may include an upper welding region W1 between the plurality of the first tab 11 and the first sub-section 111, and a side welding region W2 between the plurality of the first tab 11 and the second sub-section 113. The upper welding region W1 may be a surface where the first sub-section 111 and the plurality of the first tab 11 are in contact in a Z-axis direction. The side welding region W2 may be a surface where the second sub-section 113 and the plurality of the first tab 11 are in contact in a Y-axis direction. Here, the upper welding region W1 is a surface on which the plurality of the first tab 11 are disposed by initial bending, and the side welding region W2 is a surface on which the plurality of the first tab 11 are disposed by secondary bending.

When welding is performed on the upper welding region W1, an upper welding line W11 may be formed. The upper welding line W11 may be formed along the path of travel of a laser among regions where the plurality of the first tab 11 and the first sub-section 111 contact each other. The upper welding line W11 may be formed as multiple discrete lines, and each discrete welding line may be formed in parallel to one another. The extension direction of the upper welding line W11 may extend in the Y-axis direction as illustrated in FIG. 8.

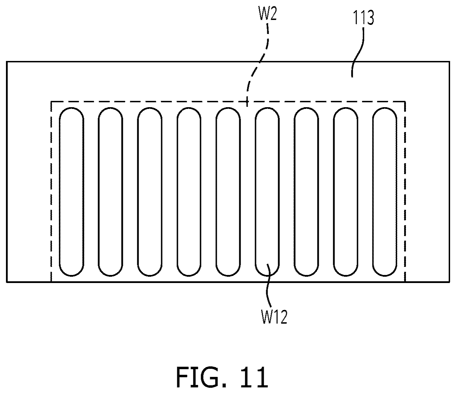

When welding is performed on the side welding region W2, a side welding line W12 (see FIG. 11) may be formed. The side welding line W12 may be formed along the path of travel of a laser among regions where the plurality of the first tab 11 and the second sub-section 113 contact each other. The side welding line W12 may be formed as multiple discrete lines, and each discrete welding line may be formed in parallel to one another. The extension direction of the side welding line W12 may extend in the Z-axis direction as illustrated in FIG. 8.

Because the second sub-section 113 (or the fourth sub-section 123) faces the coating part 20, heat generated during the welding process may affect the coating part 20. Therefore, in order to reduce heat transfer to the coating part 20 during the welding process, the support plate 50 may be composed of a material containing ceramic. For example, the support plate 50 may include a ceramic-based material that has high heat resistance and a crystal structure different from that of copper (Cu).

After completing welding and forming the upper welding line W11 and the side welding line W12, the support plate 50 may be removed. Thus, the first tab 11 and the coating part 20 may be spaced apart by the thickness of the support plate 50. That is, a separation space corresponding to the thickness of the support plate 50 may be formed between a portion of the plurality of the first tab 11 welded to the second sub-section 113 and the outermost coating part adjacent to the second sub-section 113. For example, the thickness of the support plate 50 and the separation distance may be 1 mm or less.

FIG. 11 illustrates an example of the welding lines of second set formed on the second sub-section 113 according to an embodiment of the present invention. Referring to FIG. 11, in a state where the second sub-section 113 is placed on the plurality of the first tab 11, welding may be performed on the side welding region W2. For example, when welding is performed on the side welding region W2, the side welding line W12 may be formed. By performing welding on the side welding region W2, the remaining portion of the plurality of the first tab 11 may be welded to the second sub-section 113 in a state where the remaining portion of the first tabs is secondarily bent. The width of the second sub-section 113 may be at least as large as the width of one of the plurality of the first tab 11. Here, the width may refer to a length in the X-axis direction in FIG. 8.

FIG. 12 illustrates a secondary battery 1000 including an electrode assembly welded to a current collector according to an embodiment of the present invention. The secondary battery 1000 according to the present embodiment may include at least one or more electrode assemblies, which are formed by winding a positive electrode and a negative electrode with a separator, which is an insulator, interposed therebetween, a case 1110 in which the electrode assembly is built (e.g., is accommodated), and a cap assembly coupled to an opening of the case 1110.

As an example, the secondary battery 1000 according to the present embodiment may be a lithium-ion secondary battery having a prismatic shape. However, the secondary battery 1000 may be applied to a lithium polymer battery or batteries of various shapes.

The positive electrode and the negative electrode may include a coating portion/part formed by applying an active material onto a thin metallic foil substrate and a non-coated portion (uncoated portion) not coated with the active material.

The positive electrode and the negative electrode may be wound with the separator, which is an insulator, interposed therebetween. However, the electrode assembly may also have a structure in which multiple sheets of a positive electrode and a negative electrode are alternately stacked with the separator interposed therebetween.

The case 1110 may form the overall external appearance of the secondary battery 1000 and may be formed of a conductive metal, such as aluminum, an aluminum alloy, and/or steel plated with nickel. In addition, the case 1110 may provide a space for accommodating the electrode assembly. For example, the case 1110 may have one open side and may form the bottom surface and side surfaces of the secondary battery 1000. The side surfaces of the case 1110 may include a pair of long-side walls 1110a facing each other and spaced apart from each other and a pair of short-side walls 1110b facing each other and spaced apart from each other. Here, the area of the long-side walls 1110a may be larger than the area of the short-side walls 1110b.

The cap assembly may include a cap plate 1220 that covers the opening of the case 1110, and the case 1110 and the cap plate 1220 may be formed of a conductive material. Here, positive and negative electrode terminals that are electrically connected to a positive electrode or a negative electrode may be installed so as to protrude outward through the cap plate 1220.

In addition, the positive electrode terminal 1300_1 and negative electrode terminal 1300_2 protruding to the outside of the cap plate 1220 may have a rivet structure and be coupled via rivet coupling, or may be welded to the cap plate 1220.

Also, the cap plate 1220 may be formed of a thin plate and be coupled to the opening of the case 1110. An electrolyte injection hole, in which a sealing plug 1260 may be installed, may be formed in the cap plate 1220, and a vent portion 1240 having a notch may also be installed.

The positive electrode terminal 1300_1 and the negative electrode terminal 1300_2 may be electrically connected to current collectors that includes first and second current collectors (hereinafter referred to as a positive electrode and a negative electrode current collector) that are welded to a positive electrode tabs or a negative electrode tabs.

For example, the positive electrode terminal 1300_1 and the negative electrode terminal 1300_2 may be welded to the positive and negative current collectors, respectively. However, the positive electrode terminal 1300_1 and the negative electrode terminal 1300_2 and the positive and negative current collectors may also be formed in an integrally coupled manner.

In the illustrated example, a negative electrode current collector may include a first section electrically connected to first tabs and a second section electrically connected to second tabs. Here, the first section of the negative electrode current collector may include a first sub-section 111 that is welded in a state where a portion of the first tabs is initially bent, and a second sub-section 113 that is welded in a state where the remaining portion of the first tabs is secondarily bent. In addition, the second section of the negative electrode current collector may include a third sub-section 121 that is welded in a state where a portion of the second tabs is initially bent, and a fourth sub-section 123 that is welded in a state where the remaining portion of the second tabs is secondarily bent. As illustrated, the first sub-section 111 and the third sub-section 121 may face one of the short-side walls 1110b, and the second sub-section 113 and the fourth sub-section 123 may face a long-side wall of the long-side walls 1110a. A positive electrode current collector may also be implemented similarly to the negative electrode current collector.

In some examples, the positive electrode terminal 1300_1 and the negative electrode terminal 1300_2 may be located on a left-end side surface of the electrode assembly and a right-end side surface of the electrode assembly, respectively, or may be located on one side in the same direction. Here, the terms left or right are used for convenience of explanation based on the secondary battery 1000 shown in FIG. 12, and those positions may change if the secondary battery is rotated left-right or up-down.

Also, the secondary battery 1000 may be a lithium battery cell, a sodium battery cell, or the like. However, the secondary battery 1000 includes all batteries that may repeatedly provide electricity through charging and discharging. In an embodiment, when the secondary battery 1000 is a lithium battery cell, which has excellent lifespan characteristics and high-rate characteristics, it may be used in an electric vehicle (EV), for example, a plug-in hybrid electric vehicle (PHEV). In addition, a lithium battery cell may be used in fields that require storage of large amounts of electricity. For example, it may be used in an electric bicycle, power tools, or an energy storage system (ESS).

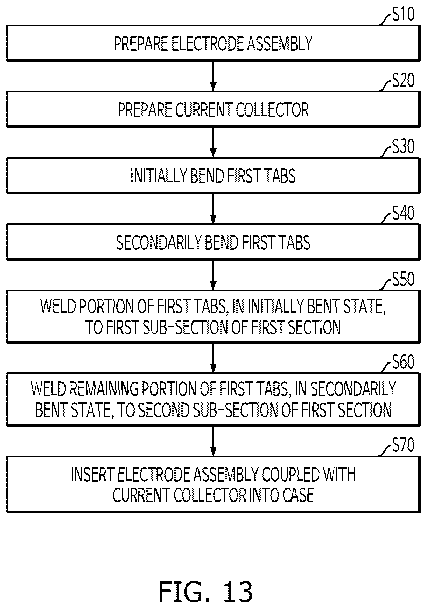

FIG. 13 is a flowchart illustrating a method of manufacturing a secondary battery according to an embodiment of the present invention. Referring to FIG. 13, a secondary battery manufacturing apparatus may sequentially perform a step S10 of preparing an electrode assembly, a step S20 of preparing a current collector, a step S30 of initially bending first tabs, a step S40 of secondarily bending the first tabs, a step S50 of welding a first sub-section, a step S60 of welding a second sub-section, and a step S70 of assembling a case.

First, in step S10, an electrode assembly may be prepared. The electrode assembly may include a plurality of electrode plates and a plurality of separators disposed between the plurality of electrode plates. First tabs and second tabs are formed in the plurality of electrode plates. Each of the plurality of electrode plates may include a coating part coated with an active material. In step S20, a current collector may be prepared. The current collector may include a first section electrically connected to the first tabs and a second section electrically connected to the second tabs.

In an embodiment, the secondary battery manufacturing apparatus may initially bend the first tabs in step S30 and secondarily bend the first tabs in step S40. In an example, prior to secondarily bending the first tabs, the secondary battery manufacturing apparatus may place a support plate on one surface of the electrode assembly. Here, the support plate may include a ceramic material.

Thereafter, in step S50, the secondary battery manufacturing apparatus may weld a portion of the first tabs to a first sub-section of the first section in a state where the first tabs are initially bent. Further, in a state where the remaining portion of the first tabs is secondarily bent, the secondary battery manufacturing apparatus may weld the remaining portion to a second sub-section of the first section. Specifically, in a state where the support plate is arranged between the remaining portion of the first tabs and an outermost coating part adjacent to the second sub-section, the secondary battery manufacturing apparatus may weld the remaining portion of the first tabs to the second sub-section of the first section. After performing the welding on the second sub-section, the secondary battery manufacturing apparatus may remove the support plate. In step S70, the secondary battery manufacturing apparatus may insert the electrode assembly coupled with the current collector into the case.

In addition, the secondary battery manufacturing apparatus may initially bend the second tabs and secondarily bend the second tabs. Thereafter, in a state where a portion of the second tabs is initially bent, the secondary battery manufacturing apparatus may weld that portion to a third sub-section of the second section. In a state where the remaining portion of the second tabs is secondarily bent, the secondary battery manufacturing apparatus may weld that remaining portion to a fourth sub-section of the second section.

In an embodiment, in a state where the first tabs and the second tabs are initially bent in opposite directions, the first tabs and the second tabs may each be welded to the first sub-section and the third sub-section, respectively. Also, in a state where the first tabs and the second tabs are secondarily bent in the same direction, the first tabs and the second tabs may each be welded to the second sub-section and the fourth sub-section, respectively.

In an embodiment, welding between the portion of the first tabs and the first sub-section and welding between the portion of the second tabs and the third sub-section may be performed on a first plane. In addition, welding between the remaining portion of the first tabs and the third sub-section may be performed on a second plane different from the first plane. Furthermore, welding between the remaining portion of the second tabs and the fourth sub-section may be performed on a third plane different from the first plane and parallel to the second plane.

In some cases, a secondary battery may use an LPW (Laser Patterning Welding) process when connecting an electrode assembly and a current collector, but if the width of a substrate of the electrode assembly is wider than the width of the current collector, un-welded substrate may be generated, or a negative influence may be exerted on a current path and cell output/capacity. In such a situation, there is a problem in that only a limited utilization of the current path from an electrode plate to a current collector is possible.

The present invention aims to ensure that, when a planar current collector structure is welded to substrates, after forming the substrates in a stack and subsequently performing a welding process for the current collector, un-welded substrates that extend beyond the width of the current collector do not occur.

According to embodiments of the present invention, because a current collector structure is designed to correspond to bent shapes of substrates, it is possible to increase the area where welding with the current collector is performed, thereby minimizing un-welded portions of the substrates.

Although the present invention has been described with reference to embodiments and drawings illustrating aspects thereof, the present invention is not limited thereto. Various modifications and variations can be made by a person skilled in the art to which the present invention belongs within the scope of the technical spirit of the present invention and the claims and their equivalents, below.

## Claims

1. A secondary battery (1000), comprising:
an electrode assembly (200) comprising a plurality of electrode plates and a plurality of separators between the plurality of electrode plates, the plurality of electrode plates comprising first tabs (11) and second tabs (12), and each of the plurality of electrode plates comprises a coating part (20) coated with an active material;
a current collector (100) electrically connected to the first tabs (11) and the second tabs (12); and
a case (1100) accommodating the electrode assembly (200), wherein:
the current collector (100) comprises a first section (110) to which the first tabs (11) are connected, and
the first section (110) comprises a first sub-section (111) to which a portion of the first tabs (11) is welded in an initially bent state and a second sub-section (113) to which a remaining portion of the first tabs (11) is welded in a secondarily bent state.

2. The secondary battery (1000) according to claim 1, wherein:
the current collector (100) further comprises a second section (120) to which the second tabs (12) are welded, and
the second section (120) comprises a third sub-section (121) to which a portion of the second tabs (12) is welded in an initially bent state and a fourth sub-section (123) to which a remaining portion of the second tabs (12) is welded in a secondarily bent state.

3. The secondary battery (1000) according to claim 2, wherein the first tabs (11) and the second tabs (12) are each welded to the first sub-section (111) and the third sub-section (121), respectively, and wherein the first tabs (11) and the second tabs (12) are initially bent in opposite directions.

4. The secondary battery (1000) according to claims 2 or 3, wherein the first tabs (11) and the second tabs (12) are each welded to the second sub-section (113) and the fourth sub-section (123), respectively, and wherein the first tabs (11) and the second tabs (12) are secondarily bent in a same direction.

5. The secondary battery (1000) according to any of claims 2 to 4, wherein:
the current collector (100) further comprises a central section (130),
the first sub-section (111) extends in a first direction from the central section (130),
the third sub-section (121) extends in a second direction from the central section (130), and
the second direction is different from the first direction.

6. The secondary battery (1000) according to any of claims 2 to 5, wherein:
the portion of the first tabs (11) and the first sub-section (111) are welded to each other on a first plane and the portion of the second tabs (12) and the third sub-section (121) are welded on the first plane,
the remaining portion of the first tabs (11) and the third sub-section (121) are welded on a second plane different from the first plane, and
the remaining portion of the second tabs (12) and the fourth sub-section (123) are welded on a third plane different from the first plane and parallel to the second plane.

7. The secondary battery (1000) according to any of claims 1 to 6, wherein a separation space is between the remaining portion of the first tabs (11) welded to the second sub-section (113) and an outermost coating part adjacent to the second sub-section (113).

8. The secondary battery (1000) according to any of claims 1 to 7, wherein:
a first set of welding lines (101) is on the first sub-section (111), and
each of the first set of welding lines (101) extends in a direction in which the first tabs (11) are initially bent.

9. The secondary battery (1000) according to any of claims 1 to 8, wherein:
a second set of welding lines (103) is on the second sub-section (113), and
each of the second set of welding lines (103) extends in a direction in which the first tabs (11) are secondarily bent.

10. A method for manufacturing a secondary battery (1000), the method comprising:
preparing an electrode assembly (200) comprising a plurality of electrode plates and a plurality of separators disposed between the plurality of electrode plates, wherein first tabs (11) and second tabs (12) are formed in the plurality of electrode plates, and each of the plurality of electrode plates comprises a coating part (20) coated with an active material;
preparing a current collector (100) comprising a first section (110) electrically connected to the first tabs (11) and a second section (120) electrically connected to the second tabs (12);
initially bending the first tabs (11);
secondarily bending the first tabs (11);
welding a portion of the first tabs (11) to a first sub-section (111) of the first section (110), wherein the first tabs (11) are initially bent;
welding a remaining portion of the first tabs (11) to a second sub-section (113) of the first section (110), wherein the first tabs (11) are secondarily bent; and
inserting the electrode assembly (200) coupled with the current collector (100) into a case (1100).

11. The method for manufacturing a secondary battery (1000) according to claim 10, further comprising:
initially bending the second tabs (12);
secondarily bending the second tabs (12);
welding a portion of the second tabs (12) to a third sub-section (121) of the second section (120) wherein the second tabs (12) are initially bent; and
welding a remaining portion of the second tabs (12) to a fourth sub-section (123) of the second section (120), wherein the second tabs (12) are secondarily bent.

12. The method for manufacturing a secondary battery (1000) according to claim 11, wherein the first tabs (11) and the second tabs (12) are each welded to the first sub-section (111) and the third sub-section (121), respectively, and wherein the first tabs (11) and the second tabs (12) are initially bent in opposite directions.

13. The method for manufacturing a secondary battery (1000) according to claim 11 or 12, wherein the first tabs (11) and the second tabs (12) are each welded to the second sub-section (113) and the fourth sub-section (123), respectively, and wherein the first tabs (11) and the second tabs (12) are secondarily bent in a same direction.

14. The method for manufacturing a secondary battery (1000) according to any of claims 11 to 13, wherein:
welding between the portion of the first tabs (11) and the first sub-section (111) and welding between the portion of the second tabs (12) and the third sub-section (121) are performed on a first plane,
welding between the remaining portion of the first tabs (11) and the third sub-section (121) is performed on a second plane different from the first plane, and
welding between the remaining portion of the second tabs (12) and the fourth sub-section (123) is performed on a third plane different from the first plane and parallel to the second plane.

15. The method for manufacturing a secondary battery (1000) according to any of claims 10 to 14, the method further comprising:
before secondarily bending the first tabs (11), arranging a support plate (50) on one surface of the electrode assembly (200);
wherein welding to the second sub-section (113) comprises welding the remaining portion of the first tabs (11) to the second sub-section (113) of the first section (110), wherein the support plate is arranged between the remaining portion of the first tabs (11) and an outermost coating part adjacent to the second sub-section (113); and
after welding to the second sub-section (113), removing the support plate (50).
